# EUROPEAN PATENT APPLICATION

(11) **EP 4 831 226 A1**
(43) Date of publication of application: **28.10.2026**
(21) Application number: 24907352.9
(22) Date of filing: 16.12.2024
(51) Int. Cl.: C08J 5/18, B65D 65/46, C08L 29/04

(54) **WATER-SOLUBLE FILM AND PACKAGE**

(30) Priority: 19.12.2023 JP 2023214299
(71) Applicant: Kuraray Co., Ltd., Kurashiki-shi, Okayama 710-0801 (JP)
(72) Inventor: AKIMUNE Mao, Kurashiki-shi, Okayama 713-8550 (JP); TAKAFUJI Masahiro, Saijo-shi, Ehime 793-8585 (JP)
(74) Representative: D Young & Co LLP
(86) International application number: PCT/JP2024/044360
(87) International publication number: WO 2025/134967

(57) **Abstract**

A water-soluble film comprising a polyvinyl alcohol, an anionic surfactant, and a nonionic surfactant, wherein the anionic surfactant satisfies the following Condition 1, an HLB of the nonionic surfactant is 8 to 11, a content of the anionic surfactant, with respect to 100 parts by mass of the polyvinyl alcohol, is 0.5 to 1.5 parts by mass, a content of the nonionic surfactant, with respect to 100 parts by mass of the polyvinyl alcohol, is 0.3 to 1.2 parts by mass,
Condition 1: a cloud point of an aqueous solution comprising the anionic surfactant at a concentration of 0.15% by mass and a polyoxyethylene alkyl ether at a concentration of 0.15% by mass is 60 to 130 °C, the polyoxyethylene alkyl ether having three oxyethylene groups and having an HLB of 8.1.

## Description

### [TECHNICAL FIELD]

The present invention relates to a water-soluble film and a package in which the same is used.

Water-soluble films are used in a wide range of intended usages such as packaging for various chemicals including liquid detergents and agricultural chemicals, and seed tapes for encapsulating seeds, by utilizing their superior solubility in water. Polyvinyl alcohols (hereinafter, may be also referred to as "PVAs") are mainly used for water-soluble films utilized in such intended usages.

In producing a water-soluble film comprising PVA, since PVA has an affinity to metals, troubles such as winding around a metal drum due to poor release from the metal drum surface may occur. To address this problem, it is known that releasability from a metal drum surface during film formation can be improved by adding a surfactant. Patent Document 1 describes that the addition of a surfactant having a specific structure inhibits changes in the film appearance during storage for a long time period, and enables a film to be fabricated that is easily released from a heat-seal plate during heat sealing.

### [PRIOR ART DOCUMENTS]

### [Patent Documents]

Patent Document 1: PCT International Publication No. 2016/167135

### [SUMMARY OF THE INVENTION]

### [Problems to be Solved by the Invention]

In order to further improve the releasability from the metal drum surface, an increase in the amount of the surfactant added is considered to be available. However, transparency of the water-soluble film tends to decrease in accordance with the amount of the surfactant added. Therefore, it is not easy to achieve both releasability from a metal drum surface and transparency in a water-soluble film comprising PVA.

In view of the foregoing circumstances, an object of the present invention is to provide: a water-soluble film that is superior in releasability from a metal drum surface and/or the like, and has high transparency; and a package in which such as water-soluble film is used.

### [Means for Solving the Problems]

The present invention concerns (1) to (13).
(1) A water-soluble film comprising a polyvinyl alcohol, an anionic surfactant, and a nonionic surfactant, wherein the anionic surfactant satisfies the following Condition 1, an HLB of the nonionic surfactant is 8 to 11, a content of the anionic surfactant, with respect to 100 parts by mass of the polyvinyl alcohol, is 0.5 to 1.5 parts by mass, a content of the nonionic surfactant, with respect to 100 parts by mass of the polyvinyl alcohol, is 0.3 to 1.2 parts by mass,
   Condition 1: a cloud point of an aqueous solution comprising the anionic surfactant at a concentration of 0.15% by mass and a polyoxyethylene alkyl ether at a concentration of 0.15% by mass is 60 to 130 °C, the polyoxyethylene alkyl ether having three oxyethylene groups and having an HLB of 8.1.
(2) The water-soluble film according to (1), wherein a degree of saponification of the polyvinyl alcohol is 80.0 to 95.5 mol%.
(3) The water-soluble film according to (1) or (2), wherein a degree of polymerization of the polyvinyl alcohol is 500 to 2,000.
(4) The water-soluble film according to any one of (1) to (3), further comprising a plasticizer, wherein the plasticizer is a polyhydric alcohol.
(5) The water-soluble film according to any one of (1) to (4), wherein a total content of the anionic surfactant and the nonionic surfactant, with respect to 100 parts by mass of the polyvinyl alcohol, is 1.3 to 2.4 parts by mass.
(6) The water-soluble film according to any one of (1) to (5), wherein a mass ratio of the anionic surfactant to the nonionic surfactant is 1.0: 0.3 to 1.0: 1.2.
(7) The water-soluble film according to any one of (1) to (6), wherein the anionic surfactant satisfies the following Condition 2,
   Condition 2: a surface tension at a lifetime of 100 ms of an aqueous solution comprising the anionic surfactant at a concentration of 0.13% by mass and a polyoxyethylene alkyl ether at a concentration of 0.13% by mass is 27 to 31 mN/m, the polyoxyethylene alkyl ether having three oxyethylene groups and having an HLB of 8.1.
(8) The water-soluble film according to any one of (1) to (7), wherein the nonionic surfactant is at least one selected from the group consisting of an alkyl ether type, an ester type, an ester ether type, an amino ether type, and an alkanolamide type.
(9) The water-soluble film according to any one of (1) to (8), wherein the anionic surfactant is at least one selected from the group consisting of a sulfuric acid ester type, a sulfonic acid type, and a sarcosinic acid type.
(10) The water-soluble film according to any one of (1) to (9), which has a complete dissolution time of 150 sec or less when immersed in deionized water at 10 °C.
(11) A package comprising: the water-soluble film according to any one of (1) to (10); and an agent encapsulated in the water-soluble film.
(12) The package according to (11), wherein the agent is an agrochemical, a detergent, or a disinfectant.
(13) The package according to (11) or (12), wherein the agent is in a liquid form.

### [Effects of the Invention]

According to the present invention, providing: a water-soluble film that is superior in releasability from a metal drum surface and/or the like, and has high transparency; and a package in which such a water-soluble film is used is enabled.

### [DESCRIPTION OF EMBODIMENTS]

In the present specification, numerical value ranges described using "to" mean that numerical values before and after "to" are included as the lower limit value and the upper limit value, respectively. Furthermore, in the present specification, the upper limit values and the lower limit values of numerical ranges (content, physical properties, etc.) can be combined as appropriate.

### Water-Soluble Film

The water-soluble film according to one embodiment of the present invention comprises a polyvinyl alcohol (PVA), an anionic surfactant, and a nonionic surfactant, wherein the anionic surfactant satisfies the following Condition 1, an HLB of the nonionic surfactant is 8 to 11, a content of the anionic surfactant, with respect to 100 parts by mass of the PVA, is 0.5 to 1.5 parts by mass, a content of the nonionic surfactant, with respect to 100 parts by mass of the PVA, is 0.3 to 1.2 parts by mass.

Condition 1: a cloud point of an aqueous solution comprising the anionic surfactant at a concentration of 0.15% by mass and a polyoxyethylene alkyl ether at a concentration of 0.15% by mass is 60 to 130 °C, the polyoxyethylene alkyl ether having three oxyethylene groups and having an HLB of 8.1.

The water-soluble film is superior in the releasability from a metal drum surface and/or the like, and has high transparency. The reason for achieving such effects is presumed as follows. Studies by the present inventors have revealed that a nonionic surfactant present particularly on the film surface contributes to the releasability from the metal drum surface and/or the like. Therefore, provided that a water-soluble film comprises a large amount of a nonionic surfactant, it is considered that a nonionic surfactant present on the film surface increases, whereby release from a hydrophilic metal drum surface or the like is facilitated. However, since a nonionic surfactant is likely to form droplets through aggregation in a hydrophilic the PVA, haze of the water-soluble film tends increase and the transparency is likely to be impaired in a case in which a large amount of the nonionic surfactant is comprised. To the contrary, by using in combination, an anionic surfactant having predetermined physical properties and a nonionic surfactant having predetermined physical properties each in a specific amount, it is considered that the nonionic surfactant is incorporated into a micellar structure formed by the anionic surfactant, whereby the aggregation of the nonionic surfactant can be inhibited. Furthermore, since the nonionic surfactant interacts with the PVA, in the case of using the nonionic surfactant alone, it exists in the entirety of inside the PVA film through dispersion. To the contrary, by using in combination, the anionic surfactant having predetermined physical properties and the nonionic surfactant having predetermined physical properties, it is considered that the nonionic surfactant is incorporated into a micellar structure formed by the anionic surfactant. In such a case, the nonionic surfactant becomes less likely to interact with PVA, and as a result, the nonionic surfactant is considered to be likely to be localized on the film surface. Accordingly, in the water-soluble film, due to comprising the predetermined anionic surfactant and the predetermined nonionic surfactant each in a predetermined amount, the nonionic surfactant can be localized on the film surface while inhibiting the aggregation of the nonionic surfactant inside the film, and as a result, it is speculated that the effect of superiority in the releasability from the metal drum surface and/or the like, as well as high transparency can be achieved.

### PVA

PVA is a polymer having a vinyl alcohol unit (-CH₂-CHOH-). The PVA may also have a monomer unit other than the vinyl alcohol unit. As the PVA, a product provided by saponifying a vinyl ester polymer obtained by polymerizing a vinyl ester monomer can be used. The polymerization and saponification can be performed by a conventionally well-known method.

Examples of the vinyl ester monomer include vinyl formate, vinyl acetate, vinyl propionate, vinyl valerate, vinyl laurate, vinyl stearate, vinyl benzoate, vinyl pivalate, vinyl versatate, and the like, and vinyl acetate is preferred.

The vinyl ester polymer is preferably one obtained by using, as a monomer, only one type, or two or more types of vinyl ester monomer, and more preferably one obtained by using, as a monomer, only one type of vinyl ester monomer. However, the vinyl ester polymer may be a copolymer of one type, or two or more types of vinyl ester monomer with other monomer that is copolymerizable thereto.

Examples of the other monomer that is copolymerizable with the vinyl ester monomer include: ethylene; olefins having 3 to 30 carbon atoms such as propylene, 1-butene, and isobutene; acrylic acid or a salt thereof; acrylic acid esters such as methyl acrylate, ethyl acrylate, n-propyl acrylate, di-propyl acrylate, n-butyl acrylate, i-butyl acrylate, t-butyl acrylate, 2-ethylhexyl acrylate, dodecyl acrylate, and octadecyl acrylate; methacrylic acid or a salt thereof; methacrylate esters such as methyl methacrylate, ethyl methacrylate, n-propyl methacrylate, i-propyl methacrylate, n-butyl methacrylate, di-butyl methacrylate, t-butyl methacrylate, 2-ethylhexyl methacrylate, dodecyl methacrylate, and octadecyl methacrylate; acrylamide derivatives such as acrylamide, N-methylacrylamide, N-ethylacrylamide, N,N-dimethylacrylamide, diacetoneacrylamide, acrylamidepropane sulfonic acid or a salt thereof, acrylamide propyl dimethylamine or a salt thereof, and N-methylolacrylamide or a derivative thereof; methacrylamide derivatives such as methacrylamide, N-methylmethacrylamide, N-ethylmethacrylamide, methacrylamidepropane sulfonic acid or a salt thereof, methacrylamide propyl dimethyl amine or a salt thereof, and N-methylolmethacrylamide or a derivative thereof; N-vinylamides such as N-vinylformamide, N-vinylacetamide, and N-vinylpyrrolidone; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides such as acrylonitrile and methacrylonitrile; vinyl halides such as vinyl chloride, vinylidene chloride, vinyl fluoride, and vinylidene fluoride; allyl compounds such as allyl acetate and allyl chloride; maleic acid or a salt, an ester, or an acid anhydride thereof; itaconic acid or a salt thereof, ester or acid anhydride; vinylsilyl compounds such as vinyltrimethoxysilane; isopropenyl acetate; and the like. The vinyl ester polymer and the PVA may have monomer unit(s) derived from one type, or two or more types of these other monomers.

Among these other monomers copolymerizable with the vinyl ester monomer, in light of the water solubility, olefins having a small number of carbon atoms (e.g., 2 or more and 3 or fewer carbon atoms) such as ethylene and propylene, carboxylic acid-based monomers such as acrylic acid and methacrylic acid, sulfonic acid-based monomers, and the like are preferred.

The PVA may be either a modified PVA such as carboxylic acid-modified PVA or sulfonic acid-modified PVA, or an unmodified PVA (PVA having no modifying group), within a range not leading to impairment of the effects of the present invention. It is to be noted that the unmodified PVA as referred to herein means a PVA consisting only of monomer units derived from a vinyl ester monomer (vinyl alcohol units and vinyl ester units).

The PVA may be a carboxylic acid-modified PVA obtained by saponifying a carboxylic acid-modified vinyl ester polymer obtained by copolymerizing a vinyl ester monomer and a carboxylic acid-based monomer. The upper limit of the degree of modification of the carboxylic acid-modified PVA is preferably 10 mol%, more preferably 8 mol%, and still more preferably 6 mol%. On the other hand, the lower limit of the degree of modification of the carboxylic acid-modified PVA is preferably 0.5 mol%, more preferably 1 mol%, and still more preferably 2 mol%. The degree of modification as referred to herein means the content (mol%) of monomer units derived from other monomer (e.g., a carboxylic acid-based monomer) copolymerizable with the vinyl ester monomer, with respect to total monomer units.

The PVA may be a sulfonic acid-modified PVA obtained by saponifying a sulfonic acid-modified vinyl ester polymer obtained by copolymerizing a vinyl ester monomer and a sulfonic acid-based monomer. The upper limit of the degree of modification of the sulfonic acid-modified PVA is preferably 8 mol%, more preferably 6 mol%, and still more preferably 4 mol%. On the other hand, the lower limit of the degree of modification of the carboxylic acid-modified PVA is preferably 0.3 mol%, more preferably 0.7 mol%, and still more preferably 1 mol%.

The upper limit of the content of the monomer derived from the other monomer unit aside from the vinyl ester monomer (degree of modification), with respect to total monomer units of the PVA is preferably 15 mol%, and more preferably 10 mol%, or may be 5 mol%, 2 mol%, 1 mol%, 0.5 mol%, or 0.1 mol%, in light of the water solubility of the water-soluble film, suppression of pinhole formation, and the like.

The degree of polymerization of the PVA is not particularly limited, and may be, for example, 100 to 3,000 and is preferably 500 to 2,000. In the case in which the degree of polymerization of the PVA is equal to or more than the lower limit, the strength of the water-soluble film can be enhanced. The lower limit of the degree of polymerization of the PVA is preferably 800, more preferably 1,000, and still more preferably 1,200. On the other hand, in the case in which the degree of polymerization of the PVA is equal to or less than the upper limit, productivity of the PVA and the water-soluble film, the water solubility of the water-soluble film, and the like can be improved. The upper limit of the degree of polymerization of the PVA is more preferably 1,800. The degree of polymerization of the PVA as referred to herein means a viscosity average degree of polymerization (Po) measured in accordance with JIS K6726-1994, which is determined by the following equation from the limiting viscosity [η] (deciliter/g) measured in water at 30 °C after resaponifying and purifying the PVA. $Po = {\left(\left[η\right]\times {10}^{4}/8.29\right)}^{\left(1/0.62\right)}$

The degree of saponification of the PVA is not particularly limited and may be, for example, 70 to 100 mol%, and is preferably 80.0 to 95.5 mol% in light of the water solubility and the like. The upper limit of the degree of saponification of the PVA is preferably 94.0 mol%, further preferably 93.0 mol%, and still further preferably 92.0 mol%. When the degree of saponification is equal to or less than the upper limit, enhancing the water solubility of the water-soluble film, and the like can be improved. The lower limit of the degree of saponification of the PVA is more preferably 83.0 mol%, still more preferably 85.0 mol%, and still further preferably 87.0 mol%. When the degree of saponification is equal to or more than the lower limit, both the water solubility and the strength of the water-soluble film tend to be well achieved. Herein, the degree of saponification of the PVA as referred to means a proportion (mol%) of the number of moles of vinyl alcohol units that the PVA has to the total number of moles of monomer units that can be converted into vinyl alcohol units by saponification (typically, vinyl ester units) and the vinyl alcohol units. The degree of saponification of the PVA can be measured in accordance with JIS K6726-1994.

As the PVA, one type of the PVA may be used alone, or two or more types of PVA having degrees of polymerization, degrees of saponification, and the like that are different, respectively, from one another may be used in combination.

The content of the PVA in the water-soluble film is not particularly limited, but the lower limit is preferably 50% by mass, more preferably 80% by mass, and still more preferably 85% by mass, or may be 90% by mass. The upper limit of the content of the PVA in the water-soluble film may be, for example, 99% by mass, or may be 95% by mass, 90% by mass, or 85% by mass.

### Anionic surfactant

The anionic surfactant comprised in the water-soluble film is not particularly limited as long as the condition 1 is satisfied, but s preferably at least one selected from the group consisting of a sulfuric acid ester type, a sulfonic acid type, and a sarcosinic acid type.

Examples of the sulfuric acid ester type anionic surfactant include:
alkyl sulfuric acid ester salts having an anion represented by R^{a}-O-SO₃⁻ (wherein, R^{a} represents an alkyl group) (e.g., sodium lauryl sulfate, sodium dodecyl sulfate, etc.);
polyoxyalkylene alkyl ether sulfuric acid ester salts having an anion represented by R^{a}-O-(R^{b}O)ₙ-SO₃⁻ (wherein, R^{a} represents an alkyl group, and R^{b} represents an alkylene group) (e.g., sodium polyoxyethylene isotridecyl ether sulfate, sodium polyoxyethylene lauryl ether sulfate, sodium polyoxyethylene polyoxypropylene lauryl ether sulfate, etc.); and the like.

As the sulfuric acid ester type anionic surfactant, among these, the polyoxyalkylene alkyl ether sulfuric acid ester salt is preferred, and the polyoxyethylene alkyl ether sulfuric acid ester salt is more preferred.

Examples of the sulfonic acid type anionic surfactant include:
dialkyl sulfosuccinic acid salts such as dialkyl sulfosuccinate and sodium di-2-ethylhexyl sulfosuccinate;
alkyl sulfonic acid salts (linear or branched alkyl sulfonic acid salts) such as octyl sulfate, lauryl sulfate, sodium lauryl sulfonate, and sodium lauryl sulfoacetate;
alpha-olefin sulfonic acid salts such as alpha-olefin sulfonate and sodium tetradecene sulfonate;
   alkylbenzene sulfonate and sodium dodecylbenzene sulfonate;
condensates of a naphthalenesulfonic acid salt with formaldehyde, such as a sodium naphthalenesulfonate-formalin condensate; and the like.

As the sulfonic acid type anionic surfactant, among these, the alkyl sulfonic acid salt is preferred.

Examples of the sarcosinic acid type anionic surfactant include acyl sarcosinic acid salts such as N-lauroyl sarcosinic acid salts.

The cation of the anionic surfactant is not particularly limited, and examples thereof include metal cations such as a sodium cation, a potassium cation, and a calcium cation, ammonium, and the like. Among these, a metal cation is preferred, an alkali metal cation such as a sodium cation or a potassium cation is more preferred, and a sodium cation is still more preferred.

As the anionic surfactant, in light of the dispersibility and the like of the nonionic surfactant, the sulfonic acid type and/or the sarcosinic acid type are/is preferred. Furthermore, in light of more improving the releasability from the metal drum surface and/or the like and transparency of the water-soluble film, the sulfuric acid ester type and/or the sarcosinic acid type are/is preferred.

The anionic surfactant satisfies the following condition 1.

Condition 1: a cloud point of an aqueous solution comprising the anionic surfactant at a concentration of 0.15% by mass and a polyoxyethylene alkyl ether at a concentration of 0.15% by mass is 60 to 130 °C, the polyoxyethylene alkyl ether having three oxyethylene groups and having an HLB of 8.1.

It is to be noted that the aqueous solution in the condition 1 is constituted only from the anionic a surfactant, the polyoxyethylene alkyl ether, and water. In addition, the HLB can be adjusted to 8.1 when the polyoxyethylene alkyl ether has three oxyalkylene groups, and the average number of carbon atoms of the alkyl group is 12 to 13. In order to attain the average number of carbon atoms of 12 to 13, those having 12 and 13 carbon atoms may be used, and/or those having fewer than 12 carbon atoms and those having more than 13 carbon atoms may be mixed for adjusting. A procedure for adjusting the HLB is exemplified by: changing the number of carbon atoms of the alkyl group in the polyoxyethylene alkyl ether to be used; employing the alkyl group having a linear/branched structure; and appropriately mixing polyoxyethylene alkyl ethers each having the number of carbon atoms of the alkyl group of 12 to 13. For example, the HLB of the nonionic surfactant used in Example 1 described later is 8.1, and this nonionic surfactant may be also used. As the polyoxyethylene alkyl ether having three oxyalkylene groups and having an HLB of 8.1, a polyoxyethylene alkyl ether having three oxyethylene groups and having a linear alkyl group with 12 carbon atoms may be used.

As referred to herein, the HLB is a value calculated by the Griffin's method. Specifically, the HLB is a value determined according to the following equation. $HLB = 20 \times \left(formula weight of hydrophilic group\right) / \left(total molecular weight\right)$

In the case of the anionic surfactant which results in a cloud point of an aqueous solution being 60 °C or more as measured under the condition 1, the anionic surfactant likely forms micelles, and the micelles readily incorporate the nonionic surfactant. As a result, the interaction between the nonionic surfactant and the PVA is reduced, whereby the nonionic surfactant is likely to be localized on the film surface. On the other hand, in the case of the anionic surfactant which results in the cloud point of 130 °C or less, formation of too large micelles of the anionic surfactant is inhibited, whereby transparency of the water-soluble film can be improved. In light of further improving the transparency of the water-soluble film, and the like, an anionic surfactant which results in the cloud point of 125 °C or less or 120 °C or less is preferred.

It is also preferred that the anionic surfactant satisfies the following condition 2.

Condition 2: a surface tension at a lifetime of 100 ms of an aqueous solution comprising an anionic surfactant at a concentration of 0.13% by mass and a polyoxyethylene alkyl ether at a concentration of 0.13% by mass is 27 to 31 mN/m, the polyoxyethylene alkyl ether having three oxyethylene groups and having an HLB of 8.1.

It is to be noted that the aqueous solution in the condition 2 is constituted only from the anionic surfactant, the polyoxyethylene alkyl ether, and water. In addition, the surface tension measured under the condition 2 is a dynamic surface tension measured in an environment of 75 °C.

In the case of the anionic surfactant which results in a surface tension of an aqueous solution being 27 mN/m or more as measured under the condition 2, formation of too large micelles of the anionic surfactant is inhibited, whereby transparency of the water-soluble film can be more improved. In light of further improving the transparency of the water-soluble film, and the like, an anionic surfactant which results in the surface tension of 28.0 mN/m or more is more preferred. On the other hand, in the case of the anionic surfactant which results in the surface tension of 31 mN/m or less, the anionic surfactant likely forms micelles, and the micelles readily incorporate the nonionic surfactant. As a result, the interaction between the nonionic surfactant and the PVA is reduced, whereby the nonionic surfactant is likely to be localized on the film surface.

The content of the anionic surfactant in the water-soluble film, with respect to 100 parts by mass of the PVA, is 0.5 to 1.5 parts by mass. In light of more sufficiently achieving the effects by the anionic surfactant, the lower limit of the content is preferably 0.6 parts by mass, and more preferably 0.8 parts by mass. Furthermore, in light of improving the transparency, the upper limit of the content is preferably 1.4 parts by mass, and more preferably 1.2 parts by mass.

### Nonionic surfactant

An HLB of the nonionic surfactant comprised in the water-soluble film is 8 to 11. When the nonionic surfactant having the HLB falling within the above range is used in combination with a predetermined anionic surfactant, achieving both the transparency of the water-soluble film and the releasability from the metal drum surface and/or the like can be contemplated. The HLB of the nonionic surfactant is preferably 8.0 to 11.0, and more preferably 8.1 to 10.8. It is to be noted that the HLB (Hydrophile-Lipophile Balance) as referred to herein means hydrophilicity-lipophilicity ratio, and is used as a value representing the degree of affinity of a surfactant for water and oil (water-insoluble organic compounds).

The nonionic surfactant is not particularly limited as long as the HLB falls within the predetermined range, and examples thereof include:
alkyl ether type (linear or branched alkyl ether type) such as polyoxyethylene alkyl ethers (e.g., polyoxyethylene lauryl ether, polyoxyethylene oleyl ether, etc.) and polyoxypropylenealkyl ethers;
ester types such as polyoxyethylene sorbitan fatty acid esters;
ester ether types such as polyoxyethylene sorbitan monolaurate;
amino ether types such as polyoxyethylene laurylamino ether;
alkyl phenyl ether types such as polyoxyethylene octyl phenyl ether;
alkyl ester types such as polyoxyethylene laurate;
alkylamine types such as polyoxyethylene laurylamino ether;
alkylamide types such as polyoxyethylene lauric acid amide;
polypropylene glycol ether types such as polyoxyethylene polyoxypropylene ether;
   diethanolamide; and
allyl phenyl ether types such as polyoxyalkylene allyl phenyl ether; and the like.

The nonionic surfactant is, in light of the releasability from the metal drum surface and/or the like, preferably at least one selected from the group consisting of an alkyl ether type, ester type, an ester ether type, an amino ether type, and an alkanolamide type, more preferably at least one selected from the group consisting of an alkyl ether type and an amino ether type, still more preferably an alkyl ether type, and even more preferably a polyoxyethylene alkyl ether. The polyoxyethylene alkyl ether includes polyoxyethylene primary alkyl ethers, polyoxyethylene secondary alkyl ethers, and the like. The number of oxyethylene groups (average number per molecule) in the polyoxyethylene alkyl ether is preferably 2 to 6, and more preferably 3 to 5.

The content of the nonionic surfactant in the water-soluble film is 0.3 to 1.2 parts by mass, with respect to 100 parts by mass of the PVA. In light of improving releasability from the metal drum surface and/or the like, the lower limit of the content is preferably 0.4 parts by mass. Further, in light of improving the transparency of the water-soluble film, the upper limit of the content is preferably 1.1 parts by mass.

Each of the anionic surfactant and the nonionic surfactant may be used alone of one type, or two or more types thereof may be used in combination.

The lower limit of the total content of the anionic surfactant and the nonionic surfactant in the water-soluble film is, with respect to 100 parts by mass of the PVA, preferably 1.3 parts by mass, and more preferably 1.5 parts by mass. When the total content is equal to or more than the lower limit, the releasability of the water-soluble film from the metal drum surface and/or the like can be more improved. On the other hand, the upper limit of the total content is preferably 2.4 parts by mass, and more preferably 2.0 parts by mass. When the total content is equal to or less than the upper limit, the transparency of the water-soluble film can be more improved.

A mass ratio of the anionic surfactant to the nonionic surfactant in the water-soluble film is preferably 1.0: 0.3 to 1.0: 1.2, and more preferably 1.0: 0.4 to 1.0: 1.1. When the mass ratio of the anionic surfactant to the nonionic surfactant falls within the above range, the releasability from the metal drum surface and/or the like, the transparency, and the like of the water-soluble film can be more improved.

### Plasticizer

The water-soluble film preferably comprises a plasticizer. Due to comprising a plasticizer, imparting favorable flexibility to the water-soluble film, and the like are enabled. In this case, the water-soluble film can be favorable in mechanical strength such as impact strength, process passability during a secondary processing, and the like.

As the plasticizer, polyhydric alcohols such as ethylene glycol, glycerin, diglycerin, propylene glycol, diethylene glycol, triethylene glycol, tetraethylene glycol, polyethylene glycol, trimethylolpropane, and sorbitol, and the like are preferred in light of bleeding out to the water-soluble film surface being less likely to occur, and the like, and at least one selected from the group consisting of ethylene glycol, glycerin, diglycerin, propylene glycol, and diethylene glycol is more preferred.

In the case in which the water-soluble film comprises a plasticizer, in light of both achieving the mechanical strength and handling characteristics of the water-soluble film, the lower limit of the content of the plasticizer in the water-soluble film, with respect to 100 parts by mass of the PVA, is preferably 1 part by mass, more preferably 3 parts by mass, and still more preferably 5 parts by mass. On the other hand, the upper limit of the content of the plasticizer, with respect to 100 parts by mass of the PVA, is preferably 50 parts by mass, and more preferably 40 parts by mass.

### Starch/ Water soluble polymer

For the purpose of imparting mechanical strength to the water-soluble film, or improving the handling characteristics, etc., of the water-soluble film, the water-soluble film may comprise starch and/or a water-soluble polymer other than the PVA.

Examples of the starch include: natural starches such as corn starch, potato starch, sweet potato starch, wheat starch, rice starch, tapioca starch, and sago starch; modified starches subjected to etherification, esterification, oxidation, or the like; and the like, and modified starches are preferred.

The lower limit of the content of the starch in the water-soluble film is, with respect to 100 parts by mass of the PVA, preferably 1 part by mass and more preferably 2 parts by mass. When the content of the starch is equal to or more than the lower limit, enhancing the mechanical strength of the water-soluble film, and the like are enabled. The upper limit of the content of the starch in the water-soluble film is, with respect to 100 parts by mass of the PVA, preferably 15 parts by mass and more preferably 10 parts by mass. When the content of the starch is equal to or less than the upper limit, process passability during production of the water-soluble film may be improved.

Examples of the water-soluble polymer other than the PVA include dextrin, gelatin, glue, casein, shellac, gum arabic, polyamide acrylate, polysodium acrylate, polyvinylmethyl ether, a copolymer of methyl vinyl ether and maleic anhydride, a copolymer of vinyl acetate and itaconic acid, polyvinylpyrrolidone, cellulose, acetylcellulose, acetylbutylcellulose, carboxymethylcellulose, methylcellulose, ethylcellulose, hydroxyethylcellulose, sodium alginate, and the like.

The upper limit of the content of the water-soluble polymer other than the PVA in the water-soluble film, with respect to 100 parts by mass of the PVA, is preferably 15 parts by mass and more preferably 10 parts by mass. The lower limit of the content of the water-soluble polymer other than the PVA in the water-soluble film may be, with respect to 100 parts by mass of the PVA, 0 parts by mass, 0.1 parts by mass, 0.5 parts by mass, or 1 part by mass.

### Filler

The water-soluble film may also comprise a filler. Due to comprising a filler, the mechanical strength and handling characteristics of the water-soluble film can be improved.

Examples of the filler include, carbon black, metal powder, silica, alumina, calcium carbonate, titanium dioxide, talc, mica, clay minerals such as bentonite, and the like. Of these, talc, mica, and clay minerals are preferred.

The upper limit of the content of the filler in the water-soluble film, with respect to 100 parts by mass of the PVA, is preferably 40 parts by mass, more preferably 20 parts by mass, and still more preferably 10 parts by mass. The lower limit of the content of the filler in the water-soluble film may be, with respect to 100 parts by mass of the PVA, 0 parts by mass, 0.1 parts by mass, 0.5 parts by mass, or 1 part by mass.

### Other components

The water-soluble film may further comprise other component(s) aside from the PVA, the anionic surfactant, the nonionic surfactant, the plasticizer, the starch, the water-soluble polymer other than the PVA, and the filler, within the range not to impair the effects of the invention. Examples of the other component include water, antioxidants, UV absorbents, lubricants, crosslinking agents, colorants, antiseptic agents, anti-mold agents, other polymer compounds, and the like. However, the total content of the PVA, the anionic surfactant, the nonionic surfactant, the plasticizer, the starch, the water-soluble polymer other than the PVA, and the filler in the water-soluble film preferably falls within the range of 60 to 100% by mass, more preferably falls within the range of 80 to 100% by mass, and still more preferably falls within the range of 90 to 100% by mass. The lower limit of this total content may be 95% by mass, 97% by mass, or 99% by mass. Also, the total content of the PVA, the anionic surfactant, the nonionic surfactant, the plasticizer, and the starch in the water-soluble film preferably falls within the range of 60 to 100% by mass, more preferably falls within the range of 80 to 100% by mass, and still more preferably falls within the range of 90 to 100% by mass. The lower limit of this total content may be 95% by mass, 97% by mass, or 99% by mass.

### Physical properties, etc.

The complete dissolution time of the water-soluble film when immersed in deionized water at 10 °C is not particularly limited, and preferably falls within the following range. I.e., the complete dissolution time is preferably within 150 sec, more preferably within 90 sec, still more preferably within 60 sec, and particularly preferably within 45 sec. The water-soluble film having a complete dissolution time falling within the above range can be suitably used as a film for packaging an agent or the like (for package material) because the dissolution is completed relatively promptly. On the other hand, the lower limit of the complete dissolution time is not particularly limited, and is preferably 5 sec, more preferably 10 sec, still more preferably 15 sec, and particularly preferably 20 sec. When the complete dissolution time of the water-soluble film is not too short in this manner, development of blocking (conglutination) between water-soluble film, as well as reduction in mechanical strength of the water-soluble film per se, and the like, owing to moisture absorption from water in an atmosphere are less likely to occur.

Specifically, the complete dissolution time of the water-soluble film when immersed in deionized water at 10 °C is measured by the following procedure.
(1) A rectangular sample with length of 40 mm × width of 35 mm is cut out from a water-soluble film. The sample is fixed by sandwiching between two plastic plates of 50 mm × 50 mm each provided with an opening of a rectangular window (hole) having a length of 35 mm × width of 25 mm, such that the longitudinal direction of the sample is in parallel to the longitudinal direction of the window and that the sample is disposed at an approximately central portion in the width direction of the window.
(2) 500 mL of deionized water is placed in a 500 mL beaker, and the water temperature is adjusted to 10 ±1.0 °C while stirring with a magnetic stirrer equipped with a bar having a length of 5 cm, such that the vortex caused by stirring is about one fifth of the water volume.
(3) The sample fixed to the plastic plate in (1) above is immersed in deionized water in the beaker, with taking care not to allow for a contact with the bar of the magnetic stirrer.
(4) After immersion in deionized water, a time period until the sample immersed in deionized water completely disappears is measured.

It is to be noted that the "sample completely disappears" as referred to herein means that any undissolved matter of the water-soluble film which can be recognized by visual inspection becomes no longer visible.

The average thickness or the thickness of the central portion of the water-soluble film is not particularly limited, but the upper limit thereof is preferably 120 µm, more preferably 100 µm, and still more preferably 80 µm, or may be 70 µm, 60 µm, or 50 µm. When the average thickness or the thickness of the central portion of the water-soluble film is equal to or less than the upper limit, the water solubility of the water-soluble film is likely to be sufficiently ensured. On the other hand, the lower limit of the average thickness or the thickness of the central portion of the water-soluble film is preferably 5 µm, more preferably 10 µm, still more preferably 15 µm, and particularly preferably 20 µm. When the average thickness or the thickness of the central portion of the water-soluble film is equal to or more than the lower limit, occurrence of punctures or the like can be suppressed when the water-soluble film is formed into a package. The average thickness of the water-soluble film can be determined as an average value of thicknesses measured at arbitrary ten sites (for example, arbitrary ten sites on a straight line drawn in a longitudinal direction of the water-soluble film).

The water-soluble film may be, for example, an elongated film. The length of the water-soluble film is not particularly limited, and may be, for example, 100 m or more, or may be 1,000 m or more or 3,000 m or more. The length of the water-soluble film may be, for example, 50,000 m or less, or may be 10,000 m or less. The water-soluble film may have been molded, cut, heat-sealed, or otherwise processed, into a predetermined shape.

### Method for producing Water-soluble film

There is no particular limitation on the method for producing the water-soluble film according to an embodiment of the present invention. For example, a method in which a film-forming stock solution prepared by adding a solvent, an anionic surfactant, a nonionic surfactant, and the like to PVA followed by homogenization is used to carry out a flow casting film-forming method, wet film-forming method (discharge into a poor solvent), dry-wet film-forming method, gel film-forming method (a method of obtaining a water-soluble film by once cooling a film-forming stock solution to permit gelation, and then extracting and removing a solvent), or a combination thereof. Alternatively, a film can be formed by any conventionally well-known method such as a melt extrusion film-forming method in which a film-forming stock solution is obtained by using an extruder or the like and the stock solution is extruded through a T-die or the like to form a film, an inflation molding method, or the like. Of these, since a homogenous water-soluble film can be obtained with favorable productivity, the flow casting film-forming method or the melt extrusion film-forming method is preferred. The flow casting film-forming method or melt the extrusion film-forming method will be explained below.

In the case in which the water-soluble film is produced by the flow casting film-forming method or the melt extrusion film-forming method, the film-forming stock solution on a support such as a metal drum is heated, whereby the solvent is removed and the stock solution solidifies to form a film. The solidified film is peeled from the support such as the metal drum. The film is then dried, as necessary, by a drying roll, a drying oven, or the like, and further subjected to heat treatment as necessary, and is wound up, whereby a roll-shaped elongated water-soluble film is obtained.

The upper limit of a volatile content of the film-forming stock solution (a percentage content of volatile components, such as a solvent, which are eliminated by volatilization during film formation and the like) is preferably 90% by mass, and more preferably 80% by mass. When the volatile content of the film-forming stock solution is equal to or less than the upper limit, the viscosity of the film-forming stock solution can be sufficiently high, thereby improving the productivity, thickness uniformity of the resultant water-soluble film, and the like. On the other hand, the lower limit of the volatile content of the film-forming stock solution is preferably 50% by mass, and more preferably 55% by mass. When the volatile content of the film-forming stock solution is equal to or more than the lower limit, the viscosity of the film-forming stock solution can be sufficiently low, thereby improving the productivity, thickness uniformity of the resultant water-soluble film, and the like.

The "volatile content of the film-forming stock solution as referred to herein means a volatile content determined by the following equation. 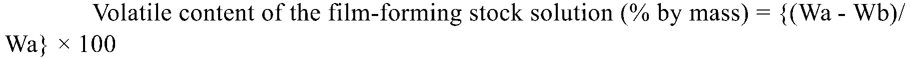 Volatile content of the film-forming stock solution (% by mass) = {(Wa - Wb)/ Wa} × 100

In the equation: Wa represents the mass (g) of a film-forming stock solution; and Wb represents the mass (g) after Wa (g) of the film-forming stock solution was dried in an electric heat dryer at 105 °C for 16 hours.

A process for preparing the film-forming stock solution is not particularly limited and, a preferred process is exemplified by: a process of dissolving the PVA, the anionic surfactant, the nonionic surfactant, and the like in a dissolution tank or the like; a process of melt kneading the PVA in a water-retaining state by using a single-screw or twin-screw extruder, together with the anionic surfactant, the nonionic surfactant, etc.; and the like.

The film-forming stock solution thus prepared is transferred to a T-die or the like through piping or the like, for example, and is discharged in a film shape onto support through the die lip.

In the method for producing the water-soluble film in which the film-forming stock solution comprising the PVA is flow-cast from the die through the die lip onto the support to give a film shape, followed by drying, a draft ratio, which is derived from the linear velocity of the support on which the stock solution is flow-cast divided by the linear velocity of the film-forming stock solution at the die lip, is typically 2 to 60. When the draft ratio falls within the above range, the thickness uniformity, water solubility, and the like of the water-soluble film tend to be improved. It is to be noted that the linear velocity of the film-forming stock solution at the die lip can be determined by dividing the volumetric flow rate of the film-forming stock solution by the area of the die lip opening (width of the die lip × the lip opening).

In concurrence with heating and drying the coating film on the support, hot air may be blown uniformly on the entire region of the non-contact surface side of the coating film to adjust the drying rate. The temperature of the hot air is typically 75 to 105 °C. Further, the velocity of the hot air is typically 3 to 10 m/sec.

The coating film formed by flow casting of the film-forming stock solution on the support to give a film shape is dried on the support, preferably to a volatile content of 5 to 50% by mass, and then peeled off and further dried, as necessary. The drying procedure is not particularly limited, and exemplified by a procedure of bringing into contact with a drying furnace or drying roll(s). In the case of drying with a plurality of drying rolls, it is preferred to alternately bring one surface and the other surface of the coating film into contact with the drying rolls in order to uniformize the physical properties of both surfaces of the obtained water-soluble film. The temperature of the drying furnace or the drying roll(s) can be appropriately selected, and is typically 40 to 110 °C.

The method for producing a water-soluble film may also comprise a step of subjecting to a heat treatment under a condition of 80 to 300 °C. Due to the temperature of the heat treatment falling within the above range, occurrence of wrinkles of the package over time can be suppressed.

The water-soluble film produced in this manner is, as necessary, further subjected to a humidity-conditioning treatment, embossing, cutting of both end portions (ear portions) of the film, and/or the like, and thereafter wound into a roll shape on a cylindrical core.

The upper limit of the volatile content of the water-soluble film finally obtained by a series of treatment is preferably 5% by mass, and more preferably 4% by mass. The lower limit of the volatile content of the water-soluble film may be 0% by mass, or may be 1% by mass or 2% by mass.

### Intended Usage of Water-Soluble Film and Package

The water-soluble film according to an embodiment of the present invention can be suitably used for various types of intended usages of water-soluble films. Examples of such water-soluble films include: agents packaging films, base films for hydraulic transfer, base films for embroidery, release films for artificial marble molding, seed packaging films, and films for waste bags. Among these, the water-soluble film is preferably used as a film for containing an agent (agent packaging film), since the effects of the invention can be more prominently achieved.

In the case in which the water-soluble film is used as an agent packaging film, the agent type is exemplified by an agrochemical, a detergent (including a bleaching agent), a disinfectant, and the like. Physical properties of the agent are not particularly limited, and may be acidic, neutral, or alkaline. Therefore, the water-soluble film can be suitably utilized as a package of an agrochemical, a detergent (including a bleaching agent), a disinfectant, or the like. Further, the form of the agent may be any of a powder form, a bulk form, a gel form, a liquid form, and the like. The form of packaging is not particularly limited, but a form of unit packaging is preferred in which each unit amount of the agent is packaged (preferably sealed packaging). In particular, a package in which an agent in a liquid form is packaged using the water-soluble film enables the agent to be used without bringing the agent into contact with skin.

Thus, a package comprising the water-soluble film according to an embodiment of the present invention, and an agent encapsulated in the water-soluble film is one suitable embodiment of the present invention. The agent packaged in the package is exemplified by those described above, and an agrochemical, a detergent, or a disinfectant is preferred. In addition, the form of the agent packaged in the package is also exemplified by those described above, but in a suitable embodiment, the agent is in a liquid form.

### EXAMPLES

Hereinafter, the present invention is specifically explained by way of Examples and the like, but the present invention is not in any how limited by the following Examples.

### Cloud Point

10 mL of an aqueous solution was prepared by dissolving 0.15 mass% of an anionic surfactant used in each of Examples or Comparative Examples and 0.15 mass% of a polyoxyethylene alkyl ether (number of oxyethylene groups: 3, HLB: 8.1), and was placed in a pressure-resistant vial and sealed. After the pressure-resistant vial was allowed to stand in a hot-air dryer at 40 °C for 30 min, the vial was taken out, and the state of the aqueous solution immediately after being taken out was confirmed. In the case in which the aqueous solution was not turbid, the vial was allowed to stand for 30 min in the hot-air dryer with the set temperature increased by 10 °C, and the state of the aqueous solution immediately after being taken out was confirmed. The operation was repeated until the aqueous solution became turbid, and the temperature at which the aqueous solution became turbid was measured as a cloud point.

### Surface Tension

100 mL of an aqueous solution was prepared by dissolving 0.13 mass% of an anionic surfactant used in each of Examples or Comparative Examples and 0.13 mass% of a polyoxyethylene alkyl ether (number of oxyethylene groups: 3, HLB: 8.1), and was allowed to stand in a dryer with the set temperature of 85 °C for 2 hrs. Dynamic surface tension of this aqueous solution was measured by using an automated dynamic surface tensiometer ("BP-D5" manufactured by Kyowa Interface Science Co., Ltd.) in an environment of 75 °C each three times, and an average value of the surface tension at a lifetime of 100 ms was determined.

### Average Thickness

In regard to the water-soluble film obtained in each of Examples or Comparative Examples, the thickness at ten arbitrary points located on a straight line drawn in the longitudinal direction at the central portion in the width direction of each film was measured by using a film thickness gauge ("DG-5100" manufactured by Ono Sokki Co., Ltd.,), and the average value thereof was determined.

### Peeling Tension from Metal Drum Surface

When the dried film is peeled from the metal drum surface in each of Examples or Comparative Examples, a tension tester ("ZTS-DPU-50N" manufactured by IMADA SEISAKUSHO CO., LTD.) was attached to the center in the width direction of the film at the peeling start position, and the film was peeled while being pulled together with the tension meter, whereby the force exerted on the film during peeling was measured as the peeling tension. In the case in which the peel tension was 0.70 N or less, the releasability from the metal drum surface and/or the like was evaluated to be superior.

### Haze

The water-soluble film obtained by each of Examples or Comparative Examples was subjected to heat treatment at 120 °C for 10 min in a hot-air dryer, and five 4-cm square film samples were cut out. The film samples cut out were used to measure Haze values with a haze meter ("HZ-2" manufactured by Suga Test Instruments Co., Ltd.), in accordance with JIS K7136, and an average value of results from five samples was determined. In the case of the haze being 12.0 or less, the transparency was assessed to be high.

### Example 1

As a film-forming stock solution, an aqueous solution was prepared which comprises 100 parts by mass of a PVA (degree of polymerization: 1,700, degree of saponification: 89.0 mol%), 15 parts by mass of glycerin as a plasticizer, 1.0 parts by mass of sodium alkyl sulfonate as an anionic surfactant, 0.5 parts by mass of polyoxyethylene alkyl ether (number of oxyethylene (OE) groups: 3, HLB: 8.1) as a nonionic surfactant, and 2.8 parts by mass of starch, wherein, a percentage content of the PVA was 13.3% by mass. In regard to the anionic surfactant employed, the cloud point measured by the method described above was 130 °C, and the surface tension was 27.6 mN/m. The film-forming stock solution was flow cast on a metal drum at 60 °C and dried for 30 min, and the dried film was peeled from the metal drum surface, whereby a water-soluble film having an average thickness of 76 µm was produced. The peeling tension from the metal drum surface at this time was 0.60 N. In regard to the water-soluble film obtained, the haze as measured by the method described above was 11.3. The results are shown in Table 1. It is to be noted that a mass ratio of polyvinyl alcohol to each surfactant comprised in the resultant water-soluble film is the same as the mass ratio of polyvinyl alcohol to each surfactant in the film-forming stock solution.

### Example 2

A water-soluble film was produced in a similar manner to Example 1, except that in the film-forming stock solution, the anionic surfactant was changed to sodium acyl sarcosinate. In regard to the anionic surfactant employed, the cloud point measured by the method described above was 110 °C, and the surface tension was 30.3 mN/m. In regard to the water-soluble film obtained, peeling tension and haze were measured by the methods described above. The results are shown in Table 1.

### Example 3

A water-soluble film was produced in a similar manner to Example 1, except that in the film-forming stock solution, the anionic surfactant was changed to sodium acyl sarcosinate, and that the nonionic surfactant was changed to polyoxyethylene alkyl ether (number of oxyethylene groups: 3, HLB: 8.2). In regard to the anionic surfactant employed, the cloud point measured by the method described above was 110 °C, and the surface tension was 30.3 mN/m. In regard to the water-soluble film obtained, peeling tension and haze were measured by the methods described above. The results are shown in Table 1.

### Example 4

A water-soluble film was produced in a similar manner to Example 1, except that in the film-forming stock solution, the anionic surfactant was changed to sodium polyoxyethylene alkyl ether sulfate, the nonionic surfactant was changed to polyoxyethylene alkyl ether (number of oxyethylene groups: 5, HLB: 10.7), and that the amount of addition of the nonionic surfactant was changed to 1.0 parts by mass. In regard to the anionic surfactant employed, the cloud point measured by the method described above was 120 °C, and the surface tension was 28.5 mN/m. In regard to the water-soluble film obtained, peeling tension and haze were measured by the methods described above. The results are shown in Table 1.

### Example 5

A water-soluble film was produced in a similar manner to Example 1, except that in the film-forming stock solution, the anionic surfactant was changed to sodium polyoxyethylene alkyl ether sulfate. In regard to the anionic surfactant employed, the cloud point measured by the method described above was 120 °C, and the surface tension was 28.5 mN/m. In regard to the water-soluble film obtained, peeling tension and haze were measured by the methods described above. The results are shown in Table 1.

### Example 6

A water-soluble film was produced in a similar manner to Example 1, except that in the film-forming stock solution, 100 parts by mass of the PVA (degree of polymerization: 1,700, degree of saponification: 89.0 mol%) were changed to a mixture of 50 parts by mass of the PVA (degree of polymerization: 1,700, degree of saponification: 89.0 mol%) and 50 parts by mass of the PVA (degree of polymerization: 500, degree of saponification: 89.0 mol%), and that the anionic surfactant was changed to sodium acyl sarcosinate. In regard to the anionic surfactant employed, the cloud point measured by the method described above was 110 °C, and the surface tension was 30.3 mN/m. In regard to the water-soluble film obtained, peeling tension and haze were measured by the methods described above. The results are shown in Table 1.

### Comparative Example 1

A water-soluble film was produced in a similar manner to Example 1, except that in the film-forming stock solution, the anionic surfactant was not added, the nonionic surfactant was changed to polyoxyethylene alkyl ether (number of oxyethylene groups: 7, HLB: 12.1), and that the amount of addition of the nonionic surfactant was changed to 1.0 parts by mass. In regard to the water-soluble film obtained, peeling tension and haze were measured by the methods described above. The results are shown in Table 1.

### Comparative Example 2

A water-soluble film was produced in a similar manner to Example 1, except that in the film-forming stock solution, the anionic surfactant was changed to sodium polyoxyethylene alkyl ether sulfate, and the nonionic surfactant was not added. In regard to the anionic surfactant employed, the cloud point measured by the method described above was 120 °C, and the surface tension was 28.5 mN/m. In regard to the water-soluble film obtained, peeling tension and haze were measured by the methods described above. The results are shown in Table 1.

### Comparative Example 3

A water-soluble film was produced in a similar manner to Example 1, except that in the film-forming stock solution, the anionic surfactant was changed to a sodium naphthalenesulfonate-formaldehyde condensate. In regard to the anionic surfactant employed, the cloud point measured by the method described above was 40 °C, and the surface tension was 40.3 mN/m. In regard to the water-soluble film obtained, peeling tension and haze were measured by the methods described above. The results are shown in Table 1.

### Comparative Example 4

A water-soluble film was produced in a similar manner to Example 1, except that in the film-forming stock solution, the amount of addition of the anionic surfactant was changed to 2.0 parts by mass. In regard to the anionic surfactant employed, the cloud point measured by the method described above was 130 °C, and the surface tension was 27.6 mN/m. In regard to the water-soluble film obtained, peeling tension and haze were measured by the methods described above. The results are shown in Table 1.

### Comparative Example 5

A water-soluble film was produced in a similar manner to Example 1, except that in the film-forming stock solution, the anionic surfactant was changed to sodium polyoxyethylene alkyl ether sulfate, the nonionic surfactant was changed to polyoxyethylene alkyl ether (number of oxyethylene groups: 5, HLB: 10.7), and that the amount of addition of the nonionic surfactant was changed to 0.1 parts by mass. In regard to the anionic surfactant employed, the cloud point measured by the method described above was 120 °C, and the surface tension was 28.5 mN/m. In regard to the water-soluble film obtained, peeling tension and haze were measured by the methods described above. The results are shown in Table 1.

### Comparative Example 6

A water-soluble film was produced in a similar manner to Example 1, except that in the film-forming stock solution, the anionic surfactant was changed to sodium polyoxyethylene alkyl ether sulfate, and the nonionic surfactant was changed to polyoxyethylene alkyl ether (number of oxyethylene groups: 15, HLB: 15.3). In regard to the anionic surfactant employed, the cloud point measured by the method described above was 120 °C, and the surface tension was 28.5 mN/m. In regard to the water-soluble film obtained, peeling tension and haze were measured by the methods described above. The results are shown in Table 1.

It is to be noted that for each of the water-soluble films obtained in the Examples and Comparative Examples, the complete dissolution time when immersed in deionized water at 10 °C by the method described above fell within 150 seconds.

**Table 1**

| | Water-soluble film | | | | | | | | | | Evaluations | |
|---|---|---|---|---|---|---|---|---|---|---|---|---|
| | Polyvinyl alcohol | | Anionic surfactant | | | | Nonionic surfactant | | | | Peeling tension from metal drum surface (N) | Haze |
| | Degree of polymerization | Degree of saponification (mol%) | Type | Amount of addition (parts by mass) | Cloud point (°C) | Surface tension (mN/m) | Type | Amount of addition (parts by mass) | Number of OE groups | HLB | | |
| Example 1 | 1,700 | 89 | sodium alkyl sulfonate | 1 | 130 | 27.6 | polyoxyethylene alkyl ether | 0.5 | 3 | 8.1 | 0.6 | 11.3 |
| Example 2 | 1,700 | 89 | sodium acyl sarcosinate | 1 | 110 | 30.3 | polyoxyethylene alkyl ether | 0.5 | 3 | 8.1 | 0.53 | 10.8 |
| Example 3 | 1,700 | 89 | sodium acyl sarcosinate | 1 | 110 | 30.3 | polyoxyethylene alkyl ether | 0.5 | 3 | 8.2 | 0.49 | 9.2 |
| Example 4 | 1,700 | 89 | sodium polyoxyethylene alkyl ether sulfate | 1 | 120 | 28.5 | polyoxyethylene alkyl ether | 1 | 5 | 10.7 | 0.45 | 10.9 |
| Example 5 | 1,700 | 89 | sodium polyoxyethylene alkyl ether sulfate | 1 | 120 | 28.5 | polyoxyethylene alkyl ether | 0.5 | 3 | 8.1 | 0.35 | 10.7 |
| Example 6* | 1,700/ 500 | 89.0/ 89.0 | sodium acyl sarcosinate | 1 | 110 | 30.3 | polyoxyethylene alkyl ether | 0.5 | 3 | 8.1 | 0.51 | 6.6 |
| Comparative Example 1 | 1,700 | 89 | - | - | - | - | polyoxyethylene alkyl ether | 1 | 7 | 12.1 | 1 | 17 |
| Comparative Example 2 | 1,700 | 89 | sodium polyoxyethylene alkyl ether sulfate | 1 | 120 | 28.5 | - | - | - | - | 1.14 | 10.8 |
| Comparative Example 3 | 1,700 | 89 | sodium naphthalenesulfonate-formaldehyde condensate | 1 | 40 | 40.3 | polyoxyethylene alkyl ether | 0.5 | 3 | 8.1 | 1.86 | 11.1 |
| Comparative Example 4 | 1,700 | 89 | sodium alkyl sulfonate | 2 | 130 | 27.6 | polyoxyethylene alkyl ether | 0.5 | 3 | 8.1 | 0.73 | 12.9 |
| Comparative Example 5 | 1,700 | 89 | sodium polyoxyethylene alkyl ether sulfate | 1 | 120 | 28.5 | polyoxyethylene alkyl ether | 0.1 | 5 | 10.7 | 0.71 | 10.7 |
| Comparative Example 6 | 1,700 | 89 | sodium polyoxyethylene alkyl ether sulfate | 1 | 120 | 28.5 | polyoxyethylene alkyl ether | 0.5 | 15 | 15.3 | 0.57 | 13.7 |

| | | | | | | | | | | | | |
|---|---|---|---|---|---|---|---|---|---|---|---|---|
| * A mixture was used which was prepared by mixing: PVA having a degree of polymerization of 1,700 and a degree of saponification of 89.0 mol%; and PVA having a degree of polymerization of 500 and a degree of saponification of 89.0 mol%, at a mass ratio of 50/50. | | | | | | | | | | | | |

As shown in Table 1, each of the water-soluble films of Examples 1 to 6 exhibited a peeling tension from a metal drum surface of 0.70 N or less, and had a haze value of 12.0 or less. Thus, these films were superior in releasability from a metal drum surface and/or the like, and had high transparency.

### [INDUSTRIAL APPLICABILITY]

The water-soluble film of the present invention can be suitably used as packaging materials and the like for various types of agents such as liquid detergents and agrochemicals.

## Claims

1. A water-soluble film comprising a polyvinyl alcohol, an anionic surfactant, and a nonionic surfactant, wherein
the anionic surfactant satisfies the following Condition 1,
an HLB of the nonionic surfactant is 8 to 11,
a content of the anionic surfactant, with respect to 100 parts by mass of the polyvinyl alcohol, is 0.5 to 1.5 parts by mass, and
a content of the nonionic surfactant, with respect to 100 parts by mass of the polyvinyl alcohol, is 0.3 to 1.2 parts by mass,
Condition 1: a cloud point of an aqueous solution comprising the anionic surfactant at a concentration of 0.15% by mass and a polyoxyethylene alkyl ether at a concentration of 0.15% by mass is 60 to 130 °C, the polyoxyethylene alkyl ether having three oxyethylene groups and having an HLB of 8.1.

2. The water-soluble film according to claim 1, wherein a degree of saponification of the polyvinyl alcohol is 80.0 to 95.5 mol%.

3. The water-soluble film according to claim 1 or 2, wherein a degree of polymerization of the polyvinyl alcohol is 500 to 2,000.

4. The water-soluble film according to claim 1 or 2, further comprising a plasticizer, wherein the plasticizer is a polyhydric alcohol.

5. The water-soluble film according to claim 1 or 2, wherein a total content of the anionic surfactant and the nonionic surfactant, with respect to 100 parts by mass of the polyvinyl alcohol, is 1.3 to 2.4 parts by mass.

6. The water-soluble film according to claim 1 or 2, wherein a mass ratio of the anionic surfactant to the nonionic surfactant is 1.0: 0.3 to 1.0: 1.2.

7. The water-soluble film according to claim 1 or 2, wherein the anionic surfactant satisfies the following Condition 2,
Condition 2: a surface tension at a lifetime of 100 ms of an aqueous solution comprising the anionic surfactant at a concentration of 0.13% by mass and a polyoxyethylene alkyl ether at a concentration of 0.13% by mass is 27 to 31 mN/m, the polyoxyethylene alkyl ether having three oxyethylene groups and having an HLB of 8.1.

8. The water-soluble film according to claim 1 or 2, wherein the nonionic surfactant is at least one selected from the group consisting of an alkyl ether type, an ester type, an ester ether type, an amino ether type, and an alkanolamide type.

9. The water-soluble film according to claim 1 or 2, wherein the anionic surfactant is at least one selected from the group consisting of a sulfuric acid ester type, a sulfonic acid type, and a sarcosinic acid type.

10. The water-soluble film according to claim 1 or 2, which has a complete dissolution time of 150 sec or less when immersed in deionized water at 10 °C.

11. A package comprising: the water-soluble film according to claim 1 or 2; and an agent encapsulated in the water-soluble film.

12. The package according to claim 12, wherein the agent is an agrochemical, a detergent, or a disinfectant.

13. The package according to claim 12, wherein the agent is in a liquid form.
